# FASCICULE DE BREVET EUROPEEN

(11) **EP 1 435 814 B1**
(45) Date de publication et mention de la délivrance du brevet: **09.02.2005**
(21) Numéro de dépôt: 02793160.9
(22) Date de dépôt: 08.10.2002
(51) Int. Cl.: A47J 31/44, A47G 19/12

(54) **VERSEUSE POUR MACHINE A BOISSONS CHAUDES ET MACHINE A BOISSONS CHAUDES AVEC VERSEUSE**
AUSGUSS FÜR MASCHINE FÜR HEISSE GETRÄNKE UND MASCHINE FÜR HEISSE GETRÄNKE MIT AUSGUSS
POURER FOR HOT BEVERAGE MACHINE AND HOT BEVERAGE MACHINE COMPRISING SAME

(30) Priorité: 15.10.2001 FR 0113283
(43) Date de publication de la demande: 14.07.2004
(73) Titulaire: SEB S.A., 69130 Ecully (FR)
(72) Inventeur: LALLEMAND, Thomas, F-90800 Buc (FR)
(74) Mandataire: Kiehl, Hubert
(86) Numéro de dépôt international: PCT/FR2002/003413
(87) Numéro de publication internationale: WO 2003/032792

(56) Documents cités:
- EP-A- 0 431 454
- GB-A- 212 427
- US-A- 5 782 163
- US-B1- 6 213 336

## Description

La présente invention se rapporte au domaine technique général des machines à boissons chaudes. La présente invention se rapporte plus particulièrement aux machines à boissons chaudes comportant une plaque de maintien au chaud et une verseuse prévue pour recueillir la boisson préparée, ainsi qu'aux verseuses utilisées avec de telles machines.

Les verseuses utilisées avec une plaque de maintien au chaud sont usuellement réalisées en verre. Ce matériau permet de concilier la transmission de la chaleur issue de la plaque chauffante avec une déperdition thermique limitée, tout en permettant à l'utilisateur de voir le contenu.

Toutefois le caractère fragile du verre le rend vulnérable aux chocs. On connait des verseuses entourées d'une protection latérale, qui permettent de réduire les risques liés aux chocs latéraux. Cependant, de telles verseuses ne résolvent pas le problème des chocs avec le plan de travail, car le fond de la verseuse n'est pas protégé. De plus le fond de la verseuse venant d'être retiré de la plaque de maintien au chaud peut endommager le plan de travail si celui-ci est peu résistant en température. En outre lorsque le fond de la verseuse est posé sur un plan de travail les échanges thermiques contribuent à refroidir relativement rapidement la verseuse et son contenu. C'est pourquoi après le service de la boisson l'utilisateur est le plus souvent contraint de replacer la verseuse sur la plaque de maintien au chaud de l'appareil.

Il est connu du document EP 0 431 454 une verseuse comportant un réceptacle ayant un fond, un support ayant une face inférieure de contact agencée autour et en dessous de la périphérie du fond du réceptacle, ainsi qu'une isolation thermique entre le réceptacle et la face inférieure de contact.

L'objet de la présente invention est de limiter les risques de détérioration du plan de travail sur lequel est posée une verseuse utilisée avec une machine à boissons chaudes comportant une plaque de maintien au chaud.

Un autre objet de la présente invention est de limiter les déperditions thermiques d'une verseuse du type précité.

Un autre objet de la présente invention est de limiter les effets des chocs sur le fond d'une verseuse du type précité.

Un autre objet de la présente invention est de limiter les effets des chocs latéraux sur une verseuse du type précité.

Un autre objet de la présente invention est de proposer une verseuse du type précité dont la construction soit économique.

Ces objets sont atteints avec une verseuse comportant un réceptacle ayant un fond, un support ayant une face inférieure de contact agencée autour et en dessous de la périphérie du fond du réceptacle, ainsi qu'une isolation thermique entre le réceptacle et la face inférieure de contact, du fait que le support est constitué par une embase montée sur la périphérie du réceptacle sur une zone d'étranglement et/ou en relief ménagée dans la paroi latérale du réceptacle. Une telle construction est simple et économique. L'embase peut notamment être réalisée en une seule. pièce. Cette disposition permet d'obtenir aisément une embase amovible. Ainsi lorsque la verseuse est en place dans l'appareil le fond du réceptacle de la verseuse peut reposer sur la plaque chauffante pour maintenir au chaud la boisson préparée. Lorsque la verseuse repose sur un plan de travail, le fond du réceptacle n'est pas en contact avec le plan de travail, ce qui permet de protéger le plan de travail de la chaleur du réceptacle. De plus l'isolation thermique permet de réduire les pertes thermiques par conduction lorsque les moyens de support reposent sur un plan de travail plus froid que le réceptacle de la verseuse. Le refroidissement de la boisson contenue dans le réceptacle peut ainsi être limité. Le support permet également d'éviter les chocs du réceptacle avec le plan de travail.

Avantageusement le support est réalisé en matériau peu conducteur de la chaleur. Le support peut ainsi être réalisé de manière particulièrement simple et économique.

En alternative ou en complément une zone d'isolation thermique peut notamment être prévue entre le réceptacle et le support, par exemple au moyen de résine ou d'élastomère, et/ou sur la face inférieure de contact du support, par exemple au moyen d'élastomère ou de feutre.

Avantageusement pour faciliter le nettoyage de la verseuse le support est amovible par rapport au réceptacle.

Avantageusement alors l'embase est montée autour du tiers inférieur du réceptacle. Cette disposition permet de réduire la taille de l'embase, et favorisé l'observation du réceptacle.

Avantageusement alors l'embase comporte une couronne, sur laquelle est ménagée la face inférieure de contact, et une série de languettes flexibles issues de la couronne, prévues pour prendre appui sur la zone d'étranglement et/ou de reliefs. Une telle construction est économique, l'embase pouvant être obtenue par moulage. L'assemblage de l'embase et du réceptacle est aisé.

Avantageusement encore, l'embase comporte des moyens de protection latérale dépassant latéralement par rapport au réceptacle, de préférence pour toute la périphérie du réceptacle.

Avantageusement encore l'embase est circulaire, une telle disposition limitant les risques d'accrochage latéral de la verseuse.

Avantageusement la verseuse comporte des moyens de protection latérale dépassant latéralement par rapport au réceptacle, de préférence pour toute la périphérie du réceptacle.

Avantageusement encore le réceptacle est en verre.

Les objets assignés à l'invention sont également atteints avec une machine à boissons chaudes, notamment cafetière éfectrique, comportant une plaque de maintien au chaud agencée dans un socle, une verseuse comportant un réceptacle ayant un fond prévu pour être disposé sur la plaque de maintien au chaud et un support ayant une face inférieure de contact agencée autour et en dessous de la périphérie du fond du réceptacle, ainsi qu'une isolation thermique entre le réceptacle et la face inférieure de contact, le socle formant un rebord autour de la plaque de maintien au chaud, le rebord ménageant au moins un espace de réception du support de la verseuse, du fait que le support est constitué par une embase montée sur la périphérie du réceptacle sur une zone d'étranglement et/ou en reiief ménagée dans la paroi latérale du réceptacle. Ainsi le fond du réceptacle peut venir en contact avec la plaque de maintien au chaud lorsque la verseuse est en place sur le socle de la machine. Lorsque de la boisson est susceptible de s'être écoulée de la machine sur la plaque de maintien au chaud et d'avoir sali le fond du réceptacle, l'absence de contact du fond du réceptacle de la verseuse avec le plan de travail évite en outre de salir ledit plan de travail.

Avantageusement alors le support ménage un jeu avec le socle de la machine à boissons chaudes lorsque la verseuse est en place sur la, plaque de maintien au chaud. Cette disposition permet de garantir le bon contact du fond du réceptacle de la verseuse avec la plaque de maintien au chaud.

L'invention sera mieux comprise à l'étude de deux exemples de réalisation, pris à titre nullement limitatifs, et illustrés dans les figures annexées, dans lesquelles:
- la figure 1 est une vue latérale en coupe d'une machine à boissons chaudes, notamment cafetière électrique, comportant une verseuse selon un premier exemple de réalisation de l'invention.
- la figure 2 est une vue latérale de la verseuse montrée à la figure 1, posée sur un plan de travail.
- la figure 3 est une vue latérale d'une verseuse posée sur un plan de travail selon un deuxième exemple de réalisation de l'invention.
- la figure 4 est une vue de dessous de la verseuse montrée à la figure 3.

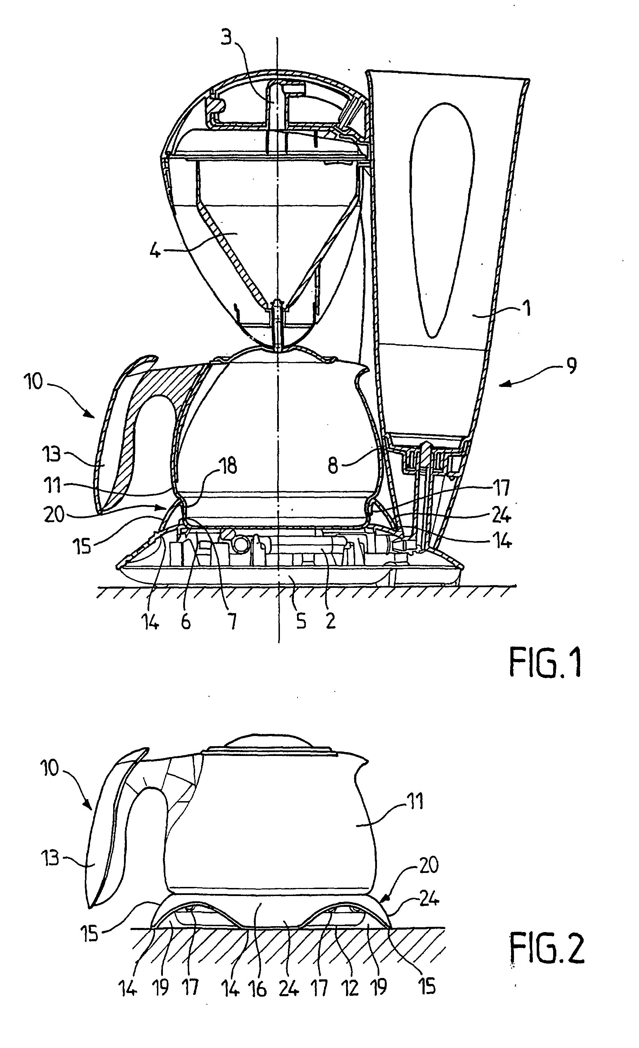

La figure 1 montre une machine à boissons chaudes 9, notamment cafetière électrique du type cafetière filtre, comportant un réservoir d'eau 1 alimentant une chaudière 2 communiquant avec une goulotte d'arrosage 3 disposée au-dessus d'un porte-filtre 4. La chaudière 2 est agencée dans un socle 5 prévu pour la réception d'une verseuse 10. A cet effet la chaudière 2 est en relation thermique avec une plaque de maintien au chaud 6 sur laquelle repose la verseuse 10. Le socle 5 forme un rebord 7 autour de la plaque de maintien au chaud 6.

La verseuse 10 comporte un réceptacle 11 avantageusement réalisé en verre. Le réceptacle 11 comporte un fond 12 prévu pour prendre appui sur la plaque de maintien au chaud 6, tel que visible à la figure 1. La verseuse 10 comporte aussi une poignée 13 et un bec verseur.

La verseuse 10 comporte un support 20 dont la face inférieure de contact 14 est agencée autour et en dessous de la périphérie du fond 12 du réceptacle 11. Le support 20 ménage autour de la périphérie du fond 12 du réceptacle 11 un espace de réception du rebord 7 entourant la plaque de maintien au chaud 6.

Une isolation thermique est prévue entre le réceptacle 11 et la face inférieure de contact 14 du support 20. Le support 20 est avantageusement réalisé en matériau peu conducteur de la chaleur, par exemple en matière plastique ou encore en inox. Toutefois un matériau non métallique est préférable pour permettre le chauffage de la verseuse dans un four à micro-ondes.

Lorsque la verseuse 10 est disposée sur le socle 5 de la machine à boissons chaudes 9, tel que montré à la figure 1, le fond 12 repose sur la plaque de maintien au chaud 6. Le support 20 peut venir en contact avec le dessus du socle 5. Un léger jeu est toutefois préférable pour garantir le contact du fond 12 du réceptacle 11 réalisé en verre avec la plaque de maintien au chaud 6, du fait des dispersions géométriques rencontrées.

Lorsque la verseuse 10 est posée sur un plan de travail, tel que montré à la figure 2, la face inférieure 14 du support 20 prend appui sur le plan de travail en laissant le fond 12 du réceptacle 11 à distance dudit plan de travail.

Selon le mode de réalisation illustré aux figures 1 et 2, le support 20 est constitué par une embase 15 montée sur la périphérie du réceptacle 11.

L'embase 15 comporte une couronne extérieure 16 présentant une série d'échancrures inférieures 19. L'embase comporte par exemple quatre échancrures, tel que montré à la figure 2. De ce fait, la face inférieure de contact 14 n'est pas continue. L'utilisateur peut ainsi observer partiellement la partie inférieure du réceptacle 11. De plus les échancrures permettent d'éviter de confiner l'espace ménagé entre le support 20 et le réceptacle 11.

L'embase 15 comporte une série de languettes flexibles internes 17 issues de la couronne 16. Les languettes flexibles internes 17 sont prévues pour prendre appui sur une zone d'étranglement 18 ménagée dans la paroi latérale du réceptacle 11 à distance du fond 12, de préférence dans le tiers inférieur de la hauteur du réceptacle 11. L'embase 15 peut être amovible si les languettes 17 sont suffisamment flexibles pour permettre un démontage.

L'espace entre la couronne 16, les languettes 17 et la périphérie de la partie inférieure du réceptacle 11 permet de loger la partie supérieure du rebord 7 ménagé autour de la plaque de maintien au chaud 6 de la machine à boissons chaudes 9.

La verseuse 10 comporte avantageusement des moyens de protection latérale 24. De préférence l'embase 15 dépasse latéralement par rapport au réceptacle 11 au moins dans la zone opposée à la poignée 13 pour former les moyens de protection latérale 24. Tel que montré à la figure 1, l'embase 15 permet d'éviter un contact latéral du réceptacle 11 avec un montant 8 de la machine à boissons chaudes 9 lors du positionnement de la verseuse 10 sur le socle 5.

Ainsi l'embase 15 permet de protéger le réceptacle 11 des chocs inférieurs lors du contact avec le plan de travail ainsi que des chocs latéraux. L'absence de contact entre le fond du réceptacle 11 et le plan de travail permet de limiter les déperditions thermiques et aussi d'éviter de salir le plan de travail lorsque des gouttes de boisson tombées sur la plaque de maintien au chaud 6 ont taché le fond 12 du réceptacle 11.

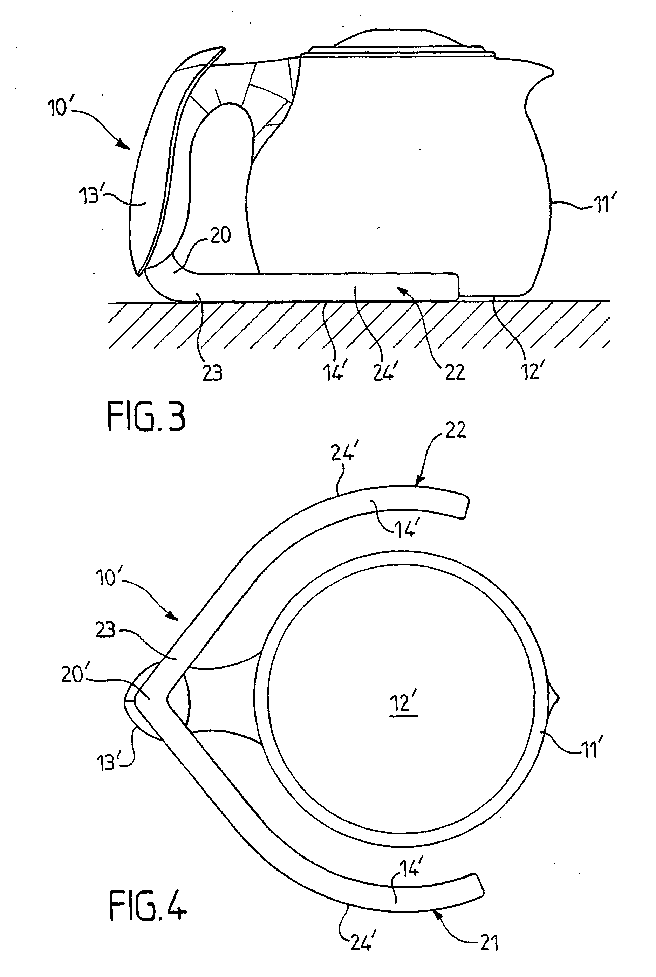

Un deuxième exemple de réalisation illustré aux figures 3 et 4 montre une verseuse 10' pouvant être également utilisée avec la machine à boissons chaudes 9 montrée à la figure 1.

La verseuse 10' comporte un réceptacle 11' avantageusement réalisé en verre, sur lequel est fixée une poignée 13', par exemple par collage. La poignée 13' est réalisée en une matière isolante thermiquement, par exemple une matière plastique.

Le support 20' est formé par une pièce 23 comportant deux bras 21, 22 s'étendant autour du réceptacle 11' à distance de la périphérie du fond 12' du réceptacle 11', tel que mieux visible sur la figure 4. La pièce 23 est montée à l'extrémité inférieure de la poignée 13'.

L'espace entre les bras 21, 22 et le réceptacle 11' permet de loger la partie supérieure du rebord 7 ménagé autour de la plaque de maintien au chaud 6 de la machine à boissons chaudes 9 montrée à la figure 1. La face inférieure de contact 14' ménagée sous les bras 21, 22 est agencée autour et en dessous de la périphérie du fond 12' du réceptacle 11'.

Tel que bien visible à la figure 3 lorsque le support 20' repose sur un plan de travail le fond 12' du réceptacle 11' n'est pas en contact avec le plan de travail.

Les deux bras 21, 22 forment également des moyens de protection latérale 24' partiels du réceptacle 11'.

A titre de variante, le support n'est pas nécessairement réalisé entièrement en matériau mauvais conducteur de la chaleur. Une zone d'isolation thermique peut par exemple être prévue entre le support 20, 20' et le réceptacle 11, 11', et/ou sur la face inférieure 14, 14' du support. Il convient dans ce dernier cas d'éviter pour le support les matériaux présentant une capacité calorifique élevée et une conductivité thermique élevée, afin d'éviter l'effet radiateur.

A titre de variante le réceptacle 11, 11' n'est pas nécessairement réalisé en verre. Le fond 12, 12' du réceptacle peut par exemple être métallique.

A titre de variante la zone d'appui du support 20, 20' sur le socle 5 peut être différente de la face inférieure de contact 14, 14' prenant appui sur le plan de travail.

A titre de variante la zone d'étranglement 18 peut également être remplacée au moins partiellement par une zone en relief. La zone d'étranglement et/ou en relief ne s'étend pas nécessairement sur toute la circonférence de la verseuse 10, mais peut notamment être discontinue.

A titre de variante les bras 21, 22 ne sont pas nécessairement issus de la poignée 13'. Les bras 21, 22 pourraient être prolongés à l'opposé de la poignée 13' pour former des moyens de protection latérale pour toute la périphérie du réceptacle 11'. Si désiré, les deux bras 21, 22 peuvent se rejoindre.

A titre de variante, le support peut comporter un seul bras, ou au contraire, plus de deux bras.

La face inférieure de contact du support peut être discontinue ou continue.

La présente invention n'est nullement limitée aux exemples de réalisation décrits et à leurs variantes, mais englobe de nombreuses modifications dans le cadre des revendications.

## Revendications

1. Verseuse (10) comportant un réceptacle (11) ayant un fond (12), un support (20) ayant une face inférieure de contact (14) agencée autour et en dessous de la périphérie du fond (12) du réceptacle (11), ainsi qu'une isolation thermique entre le réceptacle (11) et la face inférieure de contact (14), **caractérisée en ce que** le support (20) est constitué par une embase (15) montée sur la périphérie du réceptacle (11) sur une zone d'étranglement (18) et/ou en relief ménagée dans la paroi latérale du réceptacle (11).

2. Verseuse selon la revendication 1, **caractérisée en ce que** le support (20) est réalisé en matériau peu conducteur de la chaleur.

3. Verseuse selon l'une des revendications 1 ou 2, **caractérisée en ce que** le support (20) est amovible par rapport au réceptacle (11).

4. Verseuse selon l'une des revendications 1 à 3, **caractérisée en ce que** l'embase (15) est montée autour du tiers inférieur du réceptacle (11).

5. Verseuse selon l'une des revendications 1 à 4, **caractérisée en ce que** l'embase (15) comporte une couronne (16), sur laquelle est ménagée la face inférieure de contact (14), et une série de languettes internes flexibles (17) issues de la couronne (16), prévues pour prendre appui sur la zone d'étranglement (18) et/ou en relief.

6. Verseuse selon l'une des revendications 1 à 5, **caractérisée en ce que** l'embase (15) comporte des moyens de protection latérale (24) dépassant latéralement par rapport au réceptacle (11).

7. Verseuse selon l'une des revendications 1 à 6, **caractérisée en ce que** l'embase (15) est circulaire.

8. Verseuse selon l'une des revendications 1 à 7, **caractérisée en ce que** la verseuse (10) comporte des moyens de protection latérale (24) dépassant latéralement par rapport au réceptacle (11).

9. Verseuse selon l'une des revendications 1 à 8, **caractérisée en ce que** le réceptacle (11) est en verre.

10. Machine à boissons chaudes (9), notamment cafetière électrique, comportant une plaque de maintien au chaud (6) agencée dans un socle (5), une verseuse (10) comportant un réceptacle. (11) ayant un fond (12) prévu pour être disposé sur la plaque de maintien au chaud (6) et un support (20) ayant une face inférieure de contact (14) agencée autour et en dessous de la périphérie du fond (12) du réceptacle (11), ainsi qu'une isolation thermique entre le réceptacle (11) et la face inférieure de contact (14), le socle (5) formant un rebord (7) autour de la plaque de maintien au chaud (6), le rebord (7) ménageant au moins un espace de réception du support (20) de la verseuse (10), **caractérisée en ce que** le support (20) est constitué par une embase (15) montée sur la périphérie du réceptacle (11) sur une zone d'étranglement (18) et/ou en relief ménagée dans la paroi latérale du réceptacle (11).

11. Machine à boissons chaudes (9) selon la revendication 10, **caractérisée en ce que** le support (20) ménage un jeu avec le socle (5) de la machine à boissons chaudes (9) lorsque la verseuse (10) est en place sur la plaque de maintien au chaud (6).

## Patentansprüche

1. Kanne (10), aufweisend einen Behälter (11) mit einem Boden (12), einen Träger (20) mit einer unteren Kontaktfläche (14), die um den und unter dem Umfang des Bodens (12) des Behälters (11) angeordnet ist, sowie eine thermische Isolierung zwischen dem Behälter (11) und der unteren Kontaktfläche (14), **dadurch gekennzeichnet, dass** der Träger (20) aus einem Fuß (15) besteht, der am Umfang des Behälters (11) auf einem verengten (18) und/oder ausgebauchten Bereich angebracht ist, der in der Seitenwand des Behälters (11) ausgebildet ist.

2. Kanne nach Anspruch 1, **dadurch gekennzeichnet, dass** der Träger (20) aus einem Material besteht, das geringfügig wärmeleitend ist.

3. Kanne nach Anspruch 1 oder 2, **dadurch gekennzeichnet, dass** der Träger (20) in bezug zum Behälter (11) abnehmbar ist.

4. Kanne nach einem der Ansprüche 1 bis 3, **dadurch gekennzeichnet, dass** der Fuß (15) um das untere Drittel des Behälters (11) angebracht ist.

5. Kanne nach einem der Ansprüche 1 bis 4, **dadurch gekennzeichnet, dass** der Fuß (15) einen Kranz (16) aufweist, auf dem die untere Kontaktfläche (14) ausgebildet ist, und eine Reihe von inneren, nachgiebigen Laschen (17), die aus dem Kranz (16) hervorgehen und dazu vorgesehen sind, sich auf den verengten (18) und/oder ausgebauchten Bereich zu stützen.

6. Kanne nach einem der Ansprüche 1 bis 5, **dadurch gekennzeichnet, dass** der Fuß (15) Mittel (24) für einen seitlichen Schutz aufweist, die in bezug zum Behälter (11) seitlich hervorstehen.

7. Kanne nach einem der Ansprüche 1 bis 6, **dadurch gekennzeichnet, dass** der Fuß (15) kreisförmig ist.

8. Kanne nach einem der Ansprüche 1 bis 7, **dadurch gekennzeichnet, dass** die Kanne (10) Mittel (24) für einen seitlichen Schutz aufweist, die in bezug zum Behälter (11) seitlich hervorstehen.

9. Kanne nach einem der Ansprüche 1 bis 8, **dadurch gekennzeichnet, dass** der Behälter (11) aus Glas ist.

10. Maschine (9) für Heißgetränke, insbesondere elektrische Kaffeemaschine, aufweisend eine Warmhalteplatte (6), die in einem Sockel (5) angeordnet ist, eine Kanne (10), die einen Behälter (11) mit einem Boden (12) aufweist, welcher dazu vorgesehen ist, auf der Warmhalteplatte (6) angeordnet zu werden, und einen Träger (20) mit einer unteren Kontaktfläche (14), die um den und unter dem Umfang des Bodens (12) des Behälters (11) angeordnet ist, sowie eine thermische Isolierung zwischen dem Behälter (11) und der unteren Kontaktfläche (14), wobei der Sockel (5) um die Warmhalteplatte (6) einen Rand (7) ausbildet, der mindestens einen Raum für die Aufnahme des Trägers (20) der Kanne (10) bildet, **dadurch gekennzeichnet, dass** der Träger (20) aus einem Fuß (15) besteht, der am Umfang des Behälters (11) auf einem verengten (18) und/oder ausgebauchten Bereich angebracht ist, der in der Seitenwand des Behälters (11) ausgebildet ist.

11. Maschine (9) für Heißgetränke nach Anspruch 10, **dadurch gekennzeichnet, dass** der Träger (20) mit dem Sockel (5) der Maschine (9) für Heißgetränke ein Spiel bildet, wenn die Kanne (10) auf der Warmhalteplatte (6) steht.

## Claims

1. A pot (10) comprising a receptacle (11) having a bottom (12), a support (20) having a contact bottom face (14) arranged around and below the periphery of the bottom (12) of the receptacle (11), and thermal insulation between the receptacle (11) and the contact bottom face (14), the pot being **characterized in that** the support (20) is constituted by a stand (15) mounted on the periphery of the receptacle (11) via a constriction zone (18) and/or a zone in relief formed in the side wall of the receptacle (11).

2. A pot according to claim 1, **characterized in that** the support (20) is made of a material that is a poor conductor of heat.

3. A pot according to claim 1 or claim 2, **characterized in that** the support (20) is removable from the receptacle (11).

4. A pot according to any one of claims 1 to 3, **characterized in that** the stand (15) is mounted around the bottom third of the receptacle (11).

5. A pot according to any one of claims 1 to 4, **characterized in that** the stand (15) comprises a ring (16) having the contact bottom face (14) formed thereon, and a series of internal flexible tongues (17) projecting from the ring (16) and designed to bear against the constriction zone (18) and/or the zone in relief.

6. A pot according to any one of claims 1 to 5, **characterized in that** the stand (15) includes lateral protection means (24) projecting laterally from the receptacle (11).

7. A pot according to any one of claims 1 to 6, **characterized in that** the stand (15) is circular.

8. A pot according to any one of claims 1 to 7, **characterized in that** the pot (10) includes lateral protection means (24) projecting laterally from the receptacle (11).

9. A pot according to any one of claims 1 to 8, **characterized in that** the receptacle (11) is made of glass.

10. A hot beverage machine (9), in particular an electric coffee maker, the machine comprising a hot plate (6) arranged on a base (5), a pot (10) comprising a receptacle (11) with a bottom (12) designed to be placed on the hot plate (6), and a support (20) having a contact bottom face (14) arranged around and below the periphery of the bottom (12) of the receptacle (11), together with thermal insulation between the receptacle (11) and the contact bottom face (14), the base (5) forming a rim (7) around the hot plate (6), and the rim (7) leaving at least one space for receiving the support (20) of the pot (10), the machine being **characterized in that** the support (20) is constituted by a stand (15) mounted on the periphery of the receptacle (11) in a constriction zone (18) and/or a zone in relief formed in the side wall of the receptacle (11).

11. A hot beverage machine (9) according to claim 10, **characterized in that** the support (20) leaves clearance relative to the base (5) of the hot beverage machine (9) when the pot (10) is in place on the hot plate (6).
